# EUROPEAN PATENT SPECIFICATION

(11) **EP 1 086 586 B1**
(45) Date of publication and mention of the grant of the patent: **02.10.2002**
(21) Application number: 99927516.7
(22) Date of filing: 11.06.1999
(51) Int. Cl.: H04N 7/16

(54) **INTERACTIVE TELEVISION PROGRAM GUIDE WITH ON-DEMAND DATA SUPPLEMENTATION**
INTERAKTIVE ELEKTRONISCHE FERNSEHZEITSCHRIFT MIT DATENÜBERMITTLUNG AUF ANFRAGE
GUIDE INTERACTIF DE PROGRAMME TELEVISE DOTE D'UNE FONCTION SUPPLEMENTAIRE DE FOURNITURE DE DONNEES SUR DEMANDE

(30) Priority: 11.06.1998 US 88887 P
(43) Date of publication of application: 28.03.2001
(73) Proprietor: United Video Properties, Inc., Tulsa, OK 74136 (US)
(72) Inventor: ELLIS, Michael, D., Boulder, CO 80304 (US); BOYER, Franklin, E., Cleveland, OK 74020 (US); LEMMONS, Thomas R., Sand Springs, OK 74063 (US)
(74) Representative: Hale, Peter
(86) International application number: US9913341
(87) International publication number: WO99065244

(56) References cited:
- WO-A-97/42763
- WO-A-98/00976
- US-A- 5 657 072

## Description

### Background of the Invention

This invention relates to interactive television program guides, and more particularly, to interactive television program guides with on-demand data supplementation.

Cable, satellite, and broadcast television systems provide viewers with a large number of television channels. Viewers have traditionally consulted printed television program schedules to determine the programs being broadcast at a particular time. More recently, interactive television program guides have been developed that allow television program information to be displayed on a viewer's television.

Interactive program guides are typically implemented on set-top boxes. Such program guides allow users to view television program listings in different display formats. For example, a user may instruct the program guide to display a grid or table of program listings organized in a channel-ordered or a time-ordered list. Users may also search and sort program listings by genre (e.g., movies, sports, etc.) or by title (i.e., alphabetically). A user may obtain additional information for a program by placing a highlight region on a desired program listing and pressing an "info" button. The user may purchase a pay program from the program guide by placing the highlight region on a program listing and pressing an "OK" button. Some systems allow the user to select a program for recording by placing the highlight region on a program listing and pressing a "record" button.

Program guide data such as program listings, pay-per-view program purchasing information, promotional information, etc. is provided to users' set-top boxes with a data distribution system. PCT Publication No. WO 97/42763, for example, describes providing such data. Program guide data is typically stored in a central program guide database. Program guide data from the central database is transmitted to the headend facilities of various cable systems. Each headend distributes the program guide data to the set-top boxes in its system.

US5657072 discloses an interactive television program guide system in which electronic program guide data are transmitted to the local memory of a set-top box prior to a peak time in order to prevent burdensome demand during a high activity peak time.

In current systems, program guide data is stored in local memory within the set-top box or is available continuously in a data stream that the set-top box may access by tuning to a specified data channel. However, storing the program guide data locally requires significant memory in the set-top box and can be very expensive. Searching for desired information from a continuous data stream introduces significant delay between when the viewer requests the information and when it is displayed. Due to the numerous television channels and weeks worth of information available continuously on the data stream, a user may need to wait until the desired program information is available on the data stream to be viewed.

Another type of interactive television system is described in PCT Publication No. WO 98/00976, which provides still video images related to video content in an interactive television system. When the user equipment captures a requested image from a still image broadcast channel, the user equipment also pre-caches or pre-loads other related still images.

Another type of program guide system that has been used is one in which the guide was able to request certain data, but which required a memory to store all required data. User actions were used to determine which data items were requested first, but all data items were eventually requested and stored.

It is therefore an object of the present invention to provide an interactive television program guide system in which data that must be available quickly to the user is stored locally whereas data that is needed less urgently may be stored remotely and requested by the user on-demand.

### Summary of the Invention

This and other objects of the invention are accomplished in accordance with the principles of the present invention by providing a system in which quickly needed program guide information is stored locally (i.e., in local memory) while supplemental information not readily needed but available on-demand is stored remotely (i.e., in remote memory).

According to the present invention there is provided an interactive television guide system as claimed in claim 1 and a method for using an interactive television program guide system as claimed in claim 26.

Program guide data is generally available in a data source of a main facility. The main facility provides data from the data source to multiple television distribution facilities via communications links. The data transmitted by the main facility to the television distribution facilities typically include at least television program listings data such as program times, channels, titles, ratings, categories, and descriptions.

Each television distribution facility distributes television program listings data to multiple users via communications paths. Each user has user television equipment for displaying the television program listings information. The communications paths preferably have sufficient bandwidth to allow the television distribution facility to distribute multiple channels of television programming to the user television equipment.

The user television equipment that receives and processes the television program listings data from the television distribution facility may include a set-top box. The set-top box may process television program listings to generate an interactive television program guide grid on the user's display screen if desired. The user can interact with the television program guide by entering commands via a user input interface. An illustrative user input interface is an infrared remote control with cursor keys, a "guide" button and an "info" button.

Information provided to the program guide from the television distribution facility may be stored either locally within the receiver or remotely where mass storage is available. Locally-stored data may include information such as program titles, ratings, brief descriptions, times and channels of each showing, program categories, and other frequently-requested information that the user needs quick access to. Supplemental information stored remotely may include, for example, detailed descriptions of programs, biographies, video and audio clips, bitmap graphics, advertisements, trivia, world wide web Internet addresses, real-time information (e.g., sports scores), interactive applications, application extensions, and other information for which a slight delay following a request for a particular item of information by the user is acceptable.

The program guide may display locally-stored information either continuously as the user is browsing the guide or as soon as the user requests it. The program guide may request supplemental information that is stored remotely when the user requests it or as soon as it is clear the user may want to view it. For example, supplemental information may be requested by the program guide when the user tunes to a channel showing a particular program, when the user brings up locally-stored information about a particular program, or when any program listings screen or grid including a particular program or certain programs is displayed. Accordingly, the program guide may anticipate which information the user will need and may store it locally in advance of the user actually requesting it.

For example, if the user is browsing in the program guide and wishes to view information about a program scheduled to be aired, the user may browse the program guide until a program listing for the desired program is displayed on a suitable program guide display screen. The program listing may include information such as a program title, rating, actors, and a brief description. This information, typically stored locally, is available quickly and provides the user with instant feedback. There is little or no latency associated with the user's requests to view certain program listings, which allows the user to freely browse through various program guide display screens containing such program listings without incurring any delays or interruptions.

If the user wishes to view additional information about a given program, the user may position a highlight region on a program listing for that program using the remote control and may press the "info" button on the remote control. Once the user makes such a selection, another screen may be displayed by the program guide that contains further information about the program. This information may also be stored locally. Such information may include times and channels of each showing of the program during the week as well as other similar program categories.

However, if the user wishes to view still more information about the program, the user may opt to view a further information screen that provides additional detailed and descriptive information related to the program such as detailed description, biographies, video and/or audio clips, etc. This information, available on-demand, is typically stored remotely (e.g., at the television distribution facility or a network node) where mass storage exists.

Remote storage may be based on slower, less-expensive memory and involves transmission delays to the user. The user may therefore experience slight delays in viewing remotely-stored information. However, delays may be reduced by anticipating when the user will request certain supplemental information. For example, whenever the user tunes to a program on a particular channel, places a highlight region on a desired program listing on a program guide display screen, requests additional information for a program, or otherwise indicates an interest in a program, channel category of programs, etc., the program guide may request supplemental data in anticipation of the user's desire to access such data.

The length of any delay associated with accessing the supplemental information may depend on whether the user requests such information before the program guide has an opportunity to anticipate the user's desire to access the information and to request that the supplemental information be transferred to local memory. For example, if the user submits a request as soon as certain locally-stored information is displayed, the delay may be somewhat longer than if the user browses the locally-stored information for a while before submitting a request.

In addition to detailed information about a currently selected program, supplemental information may also include information on other programs in the same time frame as a program or program listing, information on programming related to the current channel to which the user is tuned, other programs in the same category or having the same actors as a particular program or program listing, etc.

If the supplemental data includes a world-wide-web Internet address, it may be added as a link to a program guide information screen. This may provide a direct link to an embedded web browser. If the link is selected by the user, the browser may be launched and the desired web page retrieved and displayed on the user television equipment. If the supplemental data includes an interactive application or an application extension, an appropriate option for invoking the application or application extension may be added to the information screen. Alternatively, the application or extension may be launched automatically (e.g., by the program guide). The application may be related to the current program or a selected program listing and may, for example, include shopping, contests, polling, games, on-going displays of supplemental data (such as sport scores or stock tickers), etc. If the supplemental data includes real-time information, that information may be added to the information screen or it may be overlaid on the video of a television program on an on-going basis, for as long as the user television equipment is tuned to that program.

Further features of the invention, its nature and various advantages will be more apparent from the accompanying drawings and the following detailed description.

### Brief Description of the Drawings

FIG. 1 is a schematic block diagram of an illustrative system in accordance with the present invention.
FIG. 2 is a schematic block diagram of illustrative user television equipment in accordance with the present invention.
FIG. 3 is a generalized schematic block diagram of portions of the illustrative television equipment of FIG. 2.
FIGS. 4 and 5 are illustrative program guide display screens in accordance with the present invention.
FIG. 6 is a schematic block diagram of illustrative user television equipment in accordance with the present invention in which details of the data supplementation circuitry are shown.
FIG. 7 is an illustrative program information display screen in accordance with the present invention.
FIGS. 8 and 9 are illustrative detailed information display screens in accordance with the present invention.
FIG. 10 is a flow chart of illustrative steps involved in using the system of FIG. 1 in accordance with the present invention.
FIG. 11 is an illustrative program information display screen in accordance with the present invention.
FIGS. 12 and 13 are illustrative detailed information display screens in accordance with the present invention.
FIG. 14 is an illustrative program information display screen in accordance with the present invention.

### Detailed Description of the Preferred Embodiments

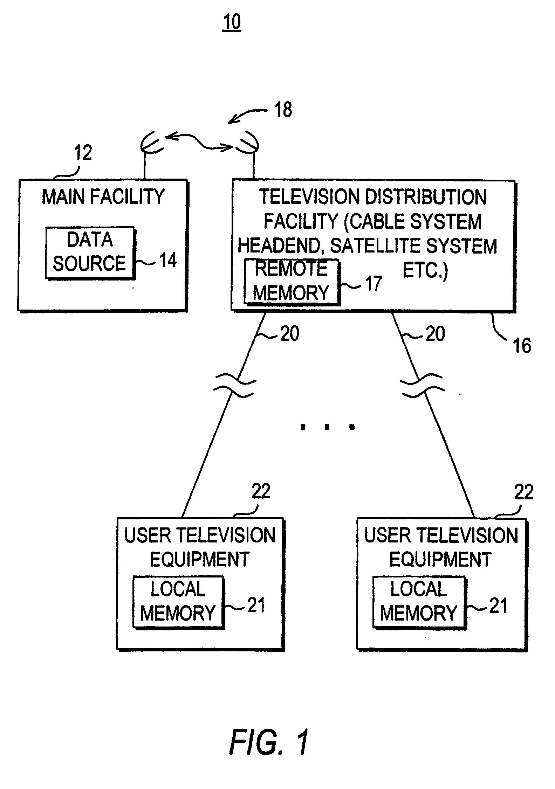

An illustrative system 10 in accordance with the present invention is shown in FIG. 1. Main facility 12 provides data from data source 14 to television distribution facility 16 via communications link 18. Link 18 may be a satellite link, a telephone network link, a cable or fiber optic link, a microwave link, a combination of such links, or any other suitable communications path. If it is desired to transmit video signals over link 18 in addition to data signals, a relatively high bandwidth link such as a satellite link may generally be preferable to a relatively low bandwidth link such as a telephone line. Television distribution facility 16 may be, for example, a cable system headend, a broadcast distribution facility, or a satellite television distribution facility.

The data transmitted by main facility 12 to television distribution facility 16 includes television program listings data (e.g., program times, channels, ratings, program categories, titles, and descriptions). Television program listings data received from main facility 12 may be quickly needed data stored locally (i.e., in local memory 21) or more detailed supplemental data stored remotely (i.e., in remote memory 17). Remote memory 17 may be any suitable memory device or devices and may be located at, for example, television distribution facility 16 (as shown in FIG. 1), a network node (e.g., in the system serviced by television distribution facility 16) or any other suitable location remote from user television equipment 22.

Television distribution facility 16 distributes the television program listings data to multiple users via communications paths 20. Each user has user television equipment 22 for displaying the television program listings information with an interactive television program guide implemented on user television equipment 22. Communications paths 20 preferably have sufficient bandwidth to allow television distribution facility 16 to distribute television programming to user television equipment. If desired, television programming may be provided over separate communications paths (not shown).

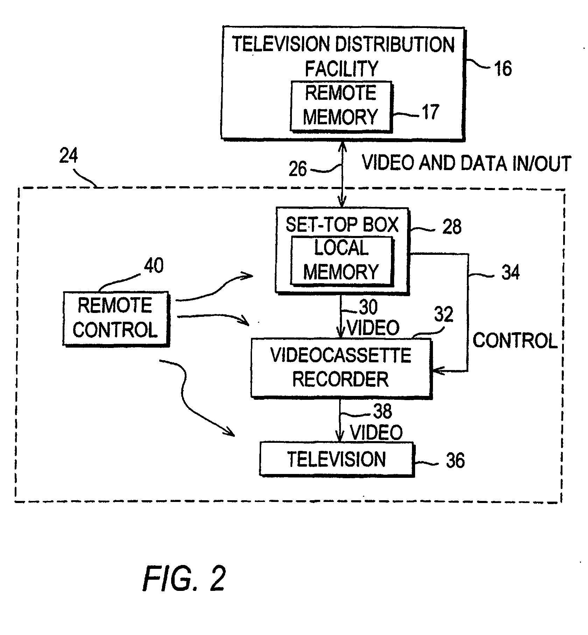

An illustrative arrangement for user television equipment 22 is shown in FIG. 2. User television equipment 24 of FIG. 2 receives and transmits video and data to and from television distribution facility 16 via remote memory source 17 at input/output 26. During normal television viewing, the user tunes set-top box 28 to a desired television channel. The signal for that television channel is then provided at video output 30 as, for example, a radio-frequency (RF) signal on a predefined channel (e.g., channel 3 or 4), a demodulated video signal, or as a digital signal. The video signal at output 30 may be received by videocassette recorder 32 (or another suitable recording device), so that the user may record programs. Program recording and other features may be controlled by set-top box 28 using control path 34. A typical control path 34 involves the use of an infrared transmitter coupled to the infrared receiver in videocassette recorder 32 that normally accepts commands from a remote control such as remote control 40. Remote control 40 may be used to control set-top box 28, videocassette recorder 32, and television 36.

Television 36 receives the appropriate video signals from videocassette recorder 32 via communications path 38. The video signals on communications path 38 may either be generated by videocassette recorder 32 when playing back a prerecorded videocassette or may be passed through videocassette recorder 32 from set-top box 28. During normal television viewing, the video signals provided to television 36 correspond to the desired channel to which the user has tuned with set-top box 28. When the user wishes to view interactive television program guide information, the user may press a "guide" button on remote control 40. When set-top box 28 receives commands from remote control 40 that inform set-top box 28 that the guide button has been pressed, the interactive television program guide is invoked and processing circuitry within set-top box 28 displays various program guide display screens on television 36.

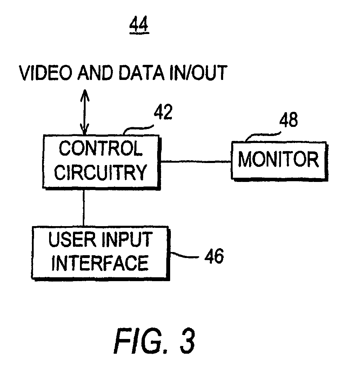

A more generalized embodiment of the user television equipment of 24 FIG. 2 is shown in FIG. 3. As shown in FIG. 3, video and data signals from television distribution facility 16 (FIG. 1) are received by control circuitry 42 of user television equipment 44. Video signals are typically provided on multiple television channels. Data may be provided, for example, by transmission on a television channel sideband in the vertical blanking interval of a television channel, an out-band or in-band digital distribution of data, or by any other suitable data transmission technique.

The user controls the operation of user television equipment 44 with user input interface 46. User input interface 46 may be a pointing device, wireless remote control, keyboard, touch pad, voice recognition system, or any other suitable user input device. To watch television, the user instructs control circuitry 42 to display a desired television channel on monitor 48. To view program guide information, the user instructs control circuitry 42 to display a program guide display screen on monitor 48.

The functions of control circuitry 42 may be provided using the set-top box arrangement of FIG. 2. Alternatively, these functions may be integrated into a television, videocassette recorder, or computer arrangement. If desired, a combination of such hardware arrangements may be used.

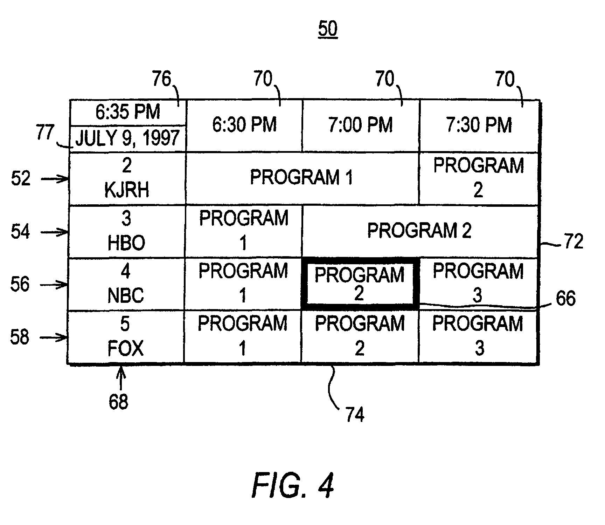

When a user indicates a desire to view television program guide information (e.g., by entering a command with user input interface 46), the program guide directs control circuitry 42 to generate a video image of a program guide display screen. The information for the program guide display screen may be contained in the data provided to the program guide from data source 14 (FIG. 1) in main facility 12 (FIG. 1). This data typically contains several days worth of programming information for the program guide. An illustrative program listings grid 50 that may be displayed by the program guide is shown in FIG. 4. Program listings grid 50 has program listings rows 52, 54, 56, and 58. Program listings row 52 contains program listings for programs 1 and 2 on channel 2 (KJRH) during the time slots 6:30 PM, 7:00 PM, and 7:30 PM. Program listings row 54 contains program listings for programs 1 and 2 on channel 3 (HBO), etc.

Program listings grid 50 (like other program guide screens displayed by the program guide) may have a highlight region 66. Highlight region 66 may be used to highlight the current grid cell. The range of movement of highlight region 66 is typically bounded by column 68 on the left, by program listings time cells 70 on the top, by screen boundary 72 on the right, and by lower screen boundary 74 on the bottom. Time cell 76 may be used to display the current time and date cell 77 may be used to display the current date.

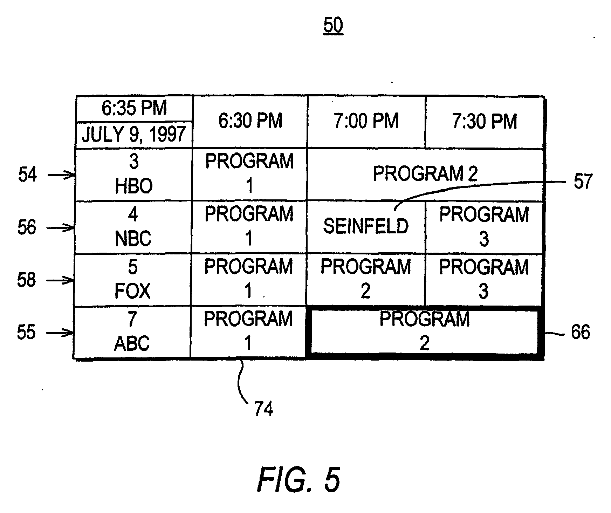

The user may position highlight region 66 by entering appropriate commands with user input interface 46. For example, if user input interface 46 is a remote control such as remote control 40 of FIG. 2, the user can position highlight region 66 using cursors. As shown in FIG. 5, if the user repeatedly moves highlight region 66 until it reaches lower screen boundary 74, further attempts at downward movement cause the program listings to scroll in the vertical direction. In the illustrative example of FIG. 5, program listings rows 54, 56, and 58 have been moved up one position in the grid. A new program listings row 55 is displayed at the bottom of grid 50. Vertical movement of highlight region 66 in the upward direction may be used to scroll the program listings in the opposite direction.

Similarly, when highlight region 66 is panned in the horizontal direction (i.e., moved to the right or left), the listings move accordingly (i.e., to the left or right respectively). Program listings grid 50 is but one illustrative program guide screen that may be displayed by the program guide on user television equipment 22. Other program guide screens that the program guide may provide include menu screens, lists or tables of program listings, screens in which products are advertised, screens in which the current television channel is overlayed with a browse or flip banner containing a program listing, etc. Any of these program screens and any suitable program guide features may be provided by the program guide.

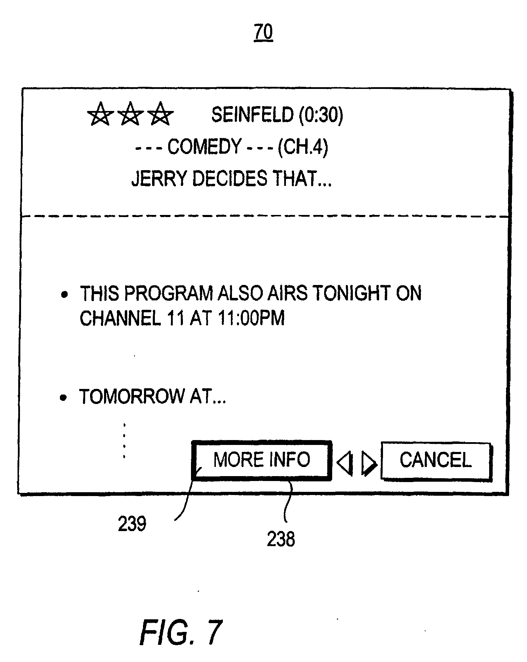

In a program guide display screen such as program listings grid 50, each program grid cell may contain a limited amount of descriptive information about a program, such as the program title, program rating, and a brief description. If the user wishes to view more information about a program, the user may position highlight region 66 on the appropriate program listing. Once the user positions highlight region 66 on a particular program listing, the user may elect to view additional information related to the program by pressing an "info" button on remote control 40. If the "info" button on remote control 40 is pressed, the user may be presented with a program information screen such as program information screen 70 of FIG. 7.

Program information screen 70 presents the user with additional information about the program selected in program grid 50. For example, if the user selects the entry "SEINFELD" (57) in program grid 50 of FIG. 5, program information screen 70 will reflect that selection and display more information about the program as shown in FIG. 7. Program information screen 70 typically contains the program title (e.g., "SEINFELD"), the running time of the program (e.g., "0:30"), a brief description of the program (e.g., "Jerry decides that..."), a description of the program category or genre (e.g., "COMEDY"), critics' rating (e.g., "***"), TV or movie rating (e.g., PG, R, NC-17, TV-Y, etc.), and alternate broadcast times and channels (e.g., This program also airs...).

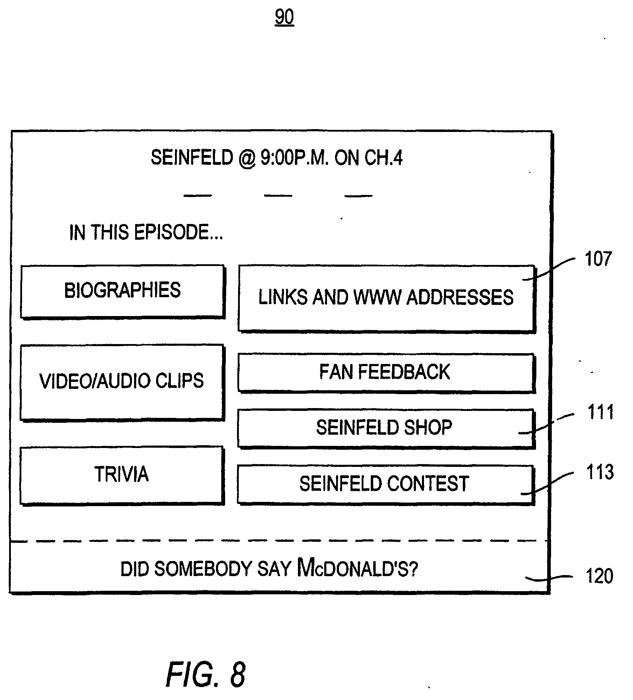

The information contained in program grid 50 of FIG. 5 and program information screen 70 of FIG. 7 will often contain all the information that the user desires. However, if the user desires to view more detailed information relating to the selected program, the user may move highlight region 238 of FIG. 7 onto "more info" option 239, which directs the program guide to display more information, such as in the form of detailed information screen 90 of FIG. 8. Detailed information screen 90 allows the user to view more detailed information on the selected program. Detailed information screen 90 may contain a more detailed description of the selected program (e.g., "In this episode..."), as well as user-selectable options that the user may select to obtain still further information on the selected program. Typical user-selectable options contained in detailed information screen 90 may include options to view biographies, options to request video and audio clips, options to view trivia, options to launch an embedded web browser and view certain Internet addresses, etc. Other data may also be displayed automatically without the user actually requesting it when the user enters detailed information screen 90. Detailed information screen 90 may also contain a variety of advertisements such as advertisement 120. Options may also be presented on screen 90 or in other suitable locations in the program guide that allow the user to invoke an application or application extension (other than the illustrative web browser application mentioned previously). The application or application extension may also be invoked automatically as the user enters that location.

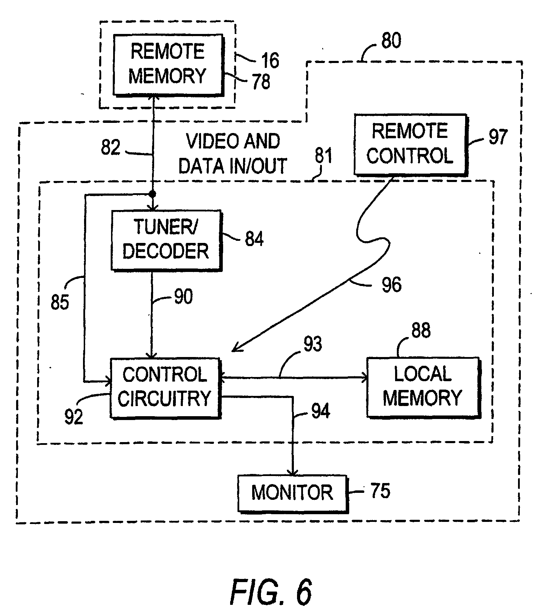

Information for the program guide may be stored locally and therefore be available instantly, or may be stored remotely and be available on-demand. Illustrative details of a system based on user television equipment containing a set-top box that is suitable for implementing the on-demand data supplementation features of the invention are shown in FIG. 6.

User television equipment 80 of FIG. 6 includes set-top box 81, television monitor 75, and remote control 97. FIG. 6 also shows remote memory 78 and television distribution facility 16.

Video for television programs and associated program listings data is received from television distribution facility 16 at input/output line 82. Input/output line 82 may also be used to receive other types of data for use by the program guide. If desired, some data may be received on one input line (e.g., a cable from a cable system headend) whereas other data may be received on another input line (e.g., a telephone line connected to the Internet). Any suitable combination of such connections may also be used to receive data and (when appropriate) to transmit requests for supplemental data from the user. For example, a user request for supplemental data may be sent to remote memory 78 via input/output line 82 while input/output line 82 may also be used to receive the requested supplemental data. The request may, if desired, be sent to remote memory 78 via another line. Tuner/decoder circuitry 84 of set-top box 81 provides, for example, a demodulated video signal for a television channel to which the viewer is tuned to control circuitry 92 via line 90. Control circuitry 92 also receives data (containing, in general, text, graphics, and video) for other television programs (i.e., programs the user is not tuned to) and data for the program guide that is related to non-television program guide features from television distribution facility 16 (FIG. 1) via line 85. Certain program guide data, such as program listings data is stored in local memory 88 by control circuitry 92 via line 93. Other data which is needed less frequently and not as urgently as the locally-stored data, is stored remotely in remote memory 78. Remote memory 78 may be any suitable memory device or devices and may be located at, for example, television distribution facility 16, a network node (e.g., in the system serviced by television distribution facility 16) or any other suitable location remote from set-top box 81. Data may be provided to remote memory 78 from main facility 12 or any other suitable data source.

Information stored in local memory 88 is usually needed quickly by the program guide or user. For example, information stored in local memory 88 (which is typically a random access memory) may include the program title, the program rating, a brief description of the program, the times and channels of each showing of the program, as well as other related program categories. This information is typically displayed by the program guide on a program guide display screen such as program grid 50 of FIG. 4 or program information screen 70 of FIG. 7. Locally-stored information provides the user with instant feedback because there is no delay associated with accessing memory 88 with the program guide.

When locally stored information is requested by the user, the program guide directs control circuitry 92 to receive the information from local memory 88 via line 93. The program guide then directs control circuitry 92 to display the information on monitor 75 via line 94.

Information stored in remote memory 78 is typically more detailed supplemental information. Such supplemental information may be, for example, information relating to a highlighted program listing or a program to which the user has tuned. This information, although available on-demand, is not sent to set-top box 81 until it is clear the user wants or may soon want it. Supplemental information initially stored in remote memory 78 may include, for example, detailed descriptions, biographies, video and audio clips, bitmap graphics, advertisements, trivia, world-wide-web Internet addresses, real-time information (such as sports scores, weather information, stock prices, news information, etc.), interactive applications (such as games, home shopping, banking, web browsing, etc.), and application extensions (i.e., parts of applications that extend the functionality of already loaded applications). Supplemental information on programming may be displayed using program guide display screens such as detailed information screen 90 of FIG. 8.

When supplemental information is requested or it is anticipated that supplemental information will be requested by the user, the program guide sends a request for the information to remote memory 78. The program guide then receives the information from remote memory 78. The user request for supplemental data may, for example, be sent to remote memory 78 via input/output line 82 while input/output line 82 may also be used to receive the requested supplemental data. The request may, if desired, be sent to remote memory 78 via any other suitable line such as a cable line or telephone line. If the user has actually requested the information (e.g., the user has selected the "more info" option 239 of program information screen 70), the program guide will display the supplemental information on monitor 75. If the user has not made an actual request for the supplemental information but it is anticipated that the supplemental information may soon be needed, the program guide may store the supplemental information in local memory 88. If the user then makes an actual request, the program guide may display the supplemental information stored in local memory 88 on monitor 75. Moreover, the program guide may also display supplemental data automatically although not specifically requested by the user. The program guide may display this data immediately (e.g., as the user enters detailed information screen 90 of FIG. 8) or as soon as it is available. However, if the user does not make an actual request or it is no longer anticipated that the information may soon be needed, the information stored in local memory 88 may be discarded or maintained until overwritten.

As the user browses through program listings such as the program listings of program listings grid 50 of FIG. 4, the program guide monitors the browsing habits of the user. Program listings guide 50 may request supplemental data whenever the user actually makes a request or whenever it is anticipated that the user will make the request. For example, as the user browses through program listings grid 50 of FIG. 4, the program guide may monitor which programs in program listings grid 50 are being displayed on monitor 75. The program guide may then retrieve supplemental information that provides more detailed information for those programs from remote memory 78 and may store the supplemental information relating to those programs in local memory 88. The program guide therefore anticipates that the user will want to view this detailed information and attempts to minimize the delay associated with displaying the information should the user actually request the information.

In addition, a request by the program guide for supplemental information may be accelerated if the user tunes to a channel showing a particular program or if the user retrieves locally-stored information about a particular program such as the information displayed in program information screen 70 of FIG. 7. As the user browses program information screen 70, the program guide is simultaneously retrieving supplemental information about that program and storing this supplemental information in local memory 88. As a result, if the user decides to select the "more info" option 239 of FIG. 7, supplemental information relating to the selected program shown in FIG. 8 is displayed more rapidly (i.e., with less of a perceived delay to the user). However, the less time the user browses program information screen 70 of FIG. 7 or is actually tuned to a channel showing a particular program, the more delay the user will experience in requesting and being provided detailed information on that program, because the program guide will have less time to retrieve the information from remote memory 78. The program guide may also display supplemental information as soon as it is available without the user actually requesting the information.

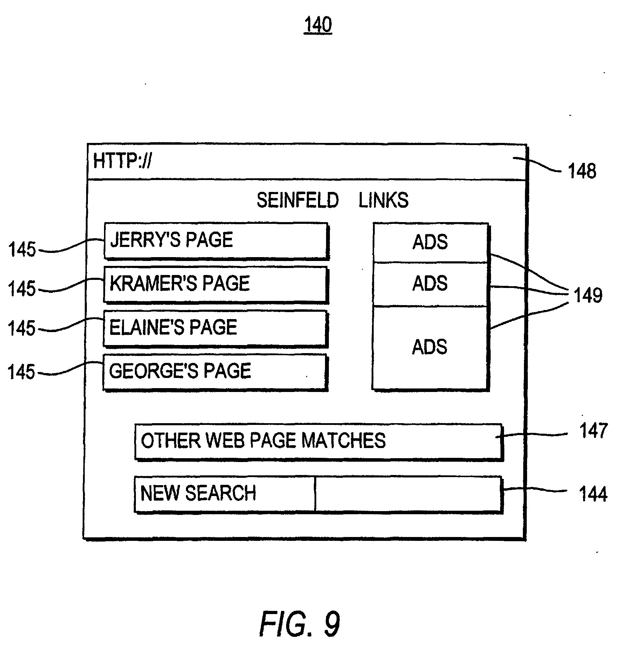

Detailed information screen 90 of FIG. 8 contains user-selectable options the user may select to view additional supplemental information about a particular program. For example, a selectable option may include a world wide web Internet address such as option 107 in FIG. 8. If the user selects option 107 of FIG. 8, the user may be presented with links screen 140 of FIG. 9. Links screen 140 may contain options that provide the user with links to program character web pages (145), with an opportunity to search for other related web pages (147), or with an opportunity to enter a new search (144) or specific world wide web address (148). Links screen 140 may also provide options related to advertisements (149) related to the program or other programs on that channel.

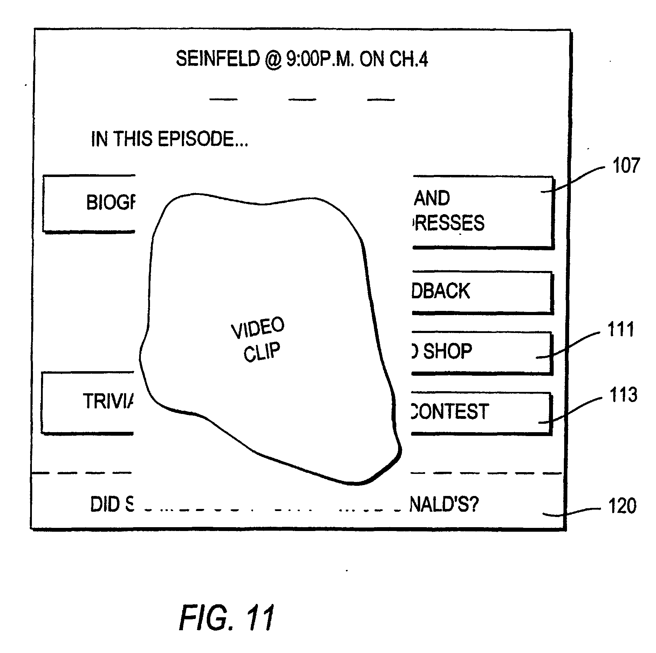

If the supplemental data includes an interactive application or application extension, access to application features may be added as an option to an information screen such as options 111 and 113, respectively, of information screen 90 of FIG. 8, or (when appropriate) an application extension may be launched automatically by the program guide. For example, as shown in FIG. 8, information screen 90 may contain user-selectable video/audio clip option 108. If the user selects option 108, the user may view a video clip of the selected program listing. If, however, this application extension is launched automatically by the program guide, the user may, for example as shown in FIG. 11, view the video clip as soon as the user is presented with information screen 90. The application may be launched (and overlaid) with any information screen or other suitable program guide display screen in the program guide or launched on a separate display screen.

Applications (and extensions) may, for example, be related to a selected program listing or the current program to which the user is tuned and may, for example, include shopping, banking, contests, polling, games, on-going displays of supplemental data (such as sports scores or stock tickers), etc. If the displayed supplemental data includes real-time information, that information may be added to any information screen or other suitable program guide display screen in the program guide or may be overlaid on the video by the program guide on an on-going basis.

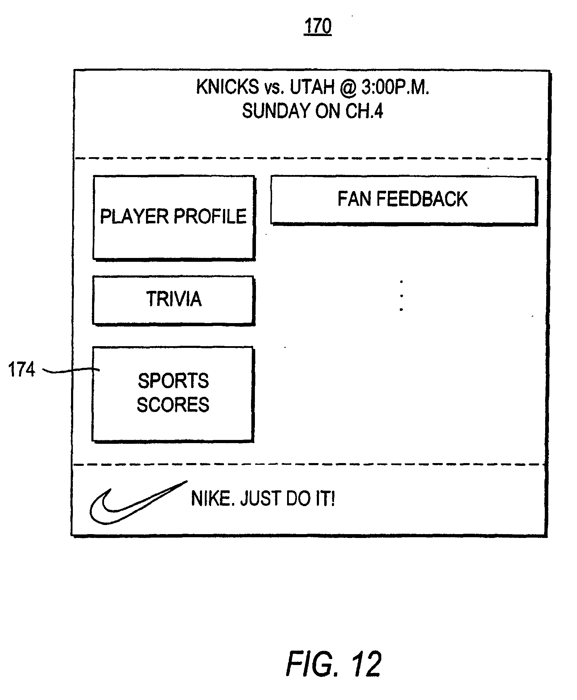

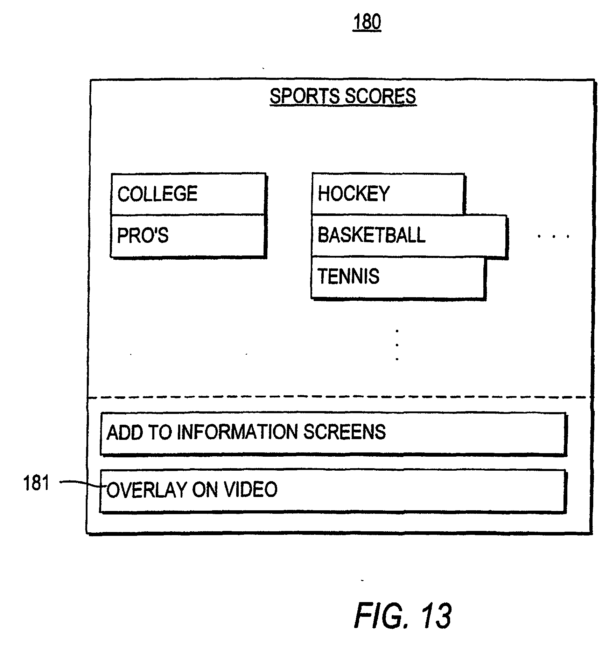

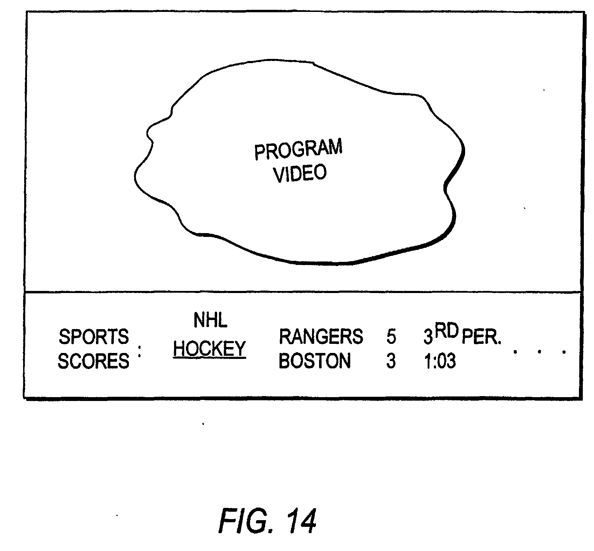

For example, if the user selects a sports event listing from program listings grid 50 of FIG. 4 and desires to view detailed information relating to the sports event, the user may be presented with a detailed information screen such as detailed information screen 170 of FIG. 12. Similar to detailed information screen 90 of FIG. 8, detailed information screen 170 contains user-selectable options the user may select to view additional supplemental information about the selected program. Detailed information screen 170 may also contain a real-time data option such as sports scores option 174. If the user selects sports scores option 174, the user may be presented with option screen 180 of FIG. 13. Option screen 180 may allow the user to select the type of information to be viewed. Option screen 180 may also allow the user to specify how and where the information is to be displayed. For example, if the user selects option 181 of options screen 180, the sports scores information may be overlaid on the program video by the program guide on an on-going basis as shown in FIG. 14. Option screen 180 may also allow the user to add the real-time information on any information screen or other suitable display screen in the program guide.

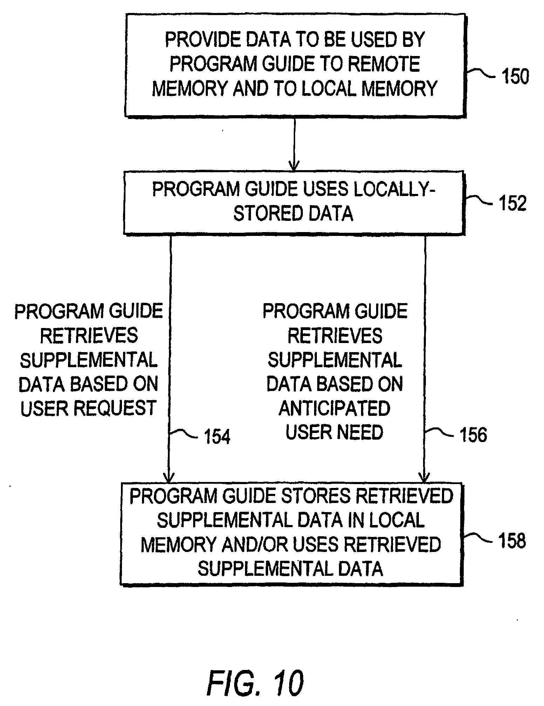

FIG. 10 shows illustrative steps involved in using the system of the present invention. At step 150, data to be used by the program guide is provided to remote memory and to local memory. The remote memory may be remote memory such as remote memory 78 of FIG. 6 that may be located at television distribution facility 16 of FIG. 1, at a network node in the area served by television distribution facility 16, or at some other suitable location remote from user television equipment 22 but accessible by the program guide at user television equipment 22. The local memory may be local memory such as local memory 88 of FIG. 6 or any other suitable memory contained within or otherwise local to user television equipment 22. Data that is provided to local memory may be provided to the local memory of user television equipment 22 located over a broad geographic area (e.g., the nation).

Data may be provided to the local memory at step 150 using any suitable technique. For example, data such as television program listings information (for which the user may desire immediate access) may be transmitted to multiple television distribution facilities 16 in parallel (either continuously or periodically) via communications paths such as communications path 18 of FIG. 1. Each television distribution facility 16 may distribute this data to the program guides on the user television equipment 22 associated with that television distribution facility 16 over communications paths 20. In each piece of user television equipment 22, the program guide may store the data in the local memory associated with that piece of user television equipment 22.

Data may also be provided to remote memory from main facility 12 at step 150. For example, detailed program descriptions may be stored in data source 14. Such detailed program descriptions may be provided to multiple television distribution facilities 16 in parallel at the same time that data such as program listings data that is to be stored in local memory is provided to facilities 16 (i.e., the detailed program descriptions may be provided to facilities 16 in the same data stream that program titles, ratings, channels, etc. are provided). The detailed program descriptions may be stored in remote memory located at these television distribution facilities or located at network nodes within the area serviced by these facilities. Other data that is to be stored in remote memory may be provided to the remote memory using different data paths. For example, real-time data such as sports scores, stock prices, weather information, news information, etc. may be provided by one or more real-time data sources (either directly or via main facility 12 or another facility or facilities separate from television distribution facility 16). Data such as video clips and audio clips may be provided to the remote memory by studios or broadcasters. Data relating to advertisements may be provided to the remote memory by advertising houses. Data relating to applications or application extensions may be provided by special facilities for the applications or extensions in question. For example, data relating to a game application may be provided to the remote memory by the provider of the game application. Data relating to a home shopping application may be provided to the remote memory by a home shopping service provider. Data relating to a home banking application may be provided to the remote memory by a banking services provider. These examples are merely illustrative. Supplemental data to be stored in the remote memory may be provided to the remote memory by any suitable technique.

At step 152, the program guide is in operation by the user. The program guide uses the locally-stored data to perform various program guide functions. For example, if program titles are stored locally, the program guide may display various program guide display screens on user television equipment 22 that contain the program titles. Because this information is available locally, there is no delay associated with displaying this information for the user. As indicated by line 154, the program guide may retrieve supplemental data stored in remote memory when the user requests additional information of the type stored in remote memory or when the user selects an option or invokes a program guide feature that directs the program guide to access an application or application extension. As indicated by line 156, the program guide may also retrieve supplemental data when the program guide anticipates that the user will need the data (e.g., to fulfill an anticipated request by the user to view additional information on a program to which the user is currently tuned or on a program mentioned in a particular program listing). At step 158, the program guide retrieves the supplemental data stored in the remote memory. The program guide may use the retrieved supplemental data immediately or later, when needed. The program guide may store the retrieved supplemental data in local memory, so that the data will be readily available when needed by the program guide.

The foregoing is merely illustrative of the principles of this invention and various modifications can be made by those skilled in the art without departing from the scope of the invention.

## Claims

1. An interactive television program guide system comprising a user television equipment (22,80) in which an interactive television program guide is implemented, the user television equipment (22,80) containing local memory (21,88) and the system having remote memory (17,78) at a location remote from the user television equipment (22,80), wherein :
the local memory (21,88) is configured to store program guide data for use by the interactive television program guide; and
the remote memory (17,78) is configured to store supplemental data for access by the interactive television program guide, wherein when the user takes actions with the user television equipment (22,80) that are indicative of a potential upcoming need for a given portion of the supplemental data, the interactive television program guide requests the given portion of the supplemental data from the remote memory (17,78) in advance of the upcoming need.

2. The interactive television program guide system defined in claim 1 **characterized by** a television distribution facility (16) configured to distribute television programming to the user television equipment (22,80), wherein the remote memory (17,78) is located in the television distribution facility (16).

3. The interactive television program guide system defined in claim 1 **characterized by**:
a television distribution facility (16) configured to distribute television programming to the user television equipment (22,80), wherein the remote memory (17,78) is located at the television distribution facility (16); and
a main facility (12) configured to provide the supplemental data to the remote memory (17,78) and configured to provide the program guide data to the television distribution facility (16) for redistribution to the local memory (21,88).

4. The interactive television program guide system defined in claim 1 **characterized in that** the program guide data includes television program listings and that the supplemental data includes detailed program descriptions for at least some of the television program listings, the system also **characterized by** a television distribution facility (16) in which the remote memory (17,78) is located.

5. The interactive television program guide system defined in claim 1 **characterized in that** the program guide data stored in the local memory (21,88) can be accessed more rapidly with the interactive television program guide than the supplemental data stored in the remote memory (17,78).

6. The interactive television program guide system defined in claim 1 **characterized in that** the program guide data includes television program listings and that the supplemental data includes detailed program descriptions for at least some of the television program listings, the system **characterized by** a television distribution facility (16) in which the remote memory (17,78) is located, wherein the television program listings can be accessed more rapidly with the interactive television program guide than the detailed program descriptions.

7. The interactive television program guide system defined in claim 1 **characterized in that** the user takes actions with the interactive television program guide that are indicative of a potential upcoming need for a given portion of the supplemental data.

8. The interactive television program guide system defined in claim 1 **characterized in that** the user takes actions with the interactive television program guide that are indicative of a potential upcoming need for a given portion of the supplemental data which actions of the user involve viewing certain program listings.

9. The interactive television program guide system defined in claim 1 **characterized in that** the actions of the user involve tuning to certain television programs.

10. The interactive television program guide system defined in claim 1 **characterized in that** the supplemental data includes an application or application extension.

11. The interactive television program guide system defined in claim 10 **characterized in that** the application or application extension is a user-selectable option.

12. The interactive television program guide system defined in claim 10 **characterized in that** the application or application extension is launched automatically by the program guide.

13. The interactive television program guide system defined in claim 1 **characterized in that** the supplemental data includes real-time information.

14. The interactive television program guide system defined in claim 13 **characterized in that** the real-time information is overlaid on the television program by the program guide on an on-going basis.

15. The interactive television program guide system defined in claim 1 **characterized in that** the supplemental data includes an Internet address.

16. The interactive television program guide system defined in claim 1 **characterized in that** the supplemental data includes an Internet address and that the interactive television program guide displays an information screen in which the Internet address is included as a link.

17. The interactive television program guide system defined in claim 1 **characterized in that** the supplemental data includes real-time data and that the interactive television program guide displays an information screen in which the real-time data is displayed.

18. The interactive television program guide system defined in claim 1 **characterized in that** the supplemental data is requested with the interactive television program guide on-demand by user actions with the interactive television program guide.

19. The interactive television program guide system defined in claim 1 **characterized in that** the supplemental data is displayed automatically by the program guide as soon as it is available.

20. The interactive television program guide system defined in claim 1 **characterized in that** the supplemental data includes biographies.

21. The interactive television program guide system defined in claim 1 **characterized in that** the supplemental data includes video clips.

22. The interactive television program guide system defined in claim 1 **characterized in that** the supplemental data includes audio clips.

23. The interactive television program guide system defined in claim 1 **characterized in that** the supplemental data includes bitmap graphics.

24. The interactive television program guide system defined in claim 1 **characterized in that** the supplemental data includes trivia information.

25. The interactive television program guide system defined in claim 1 **characterized in that** the supplemental data includes advertisements.

26. A method for using an interactive television program guide system in which an interactive television program guide is implemented on user television equipment (22,80), the user television equipment (22,80) containing local memory (21,88) configured to store program guide data for use by the interactive television program guide and the system having remote memory (17,78) at a location remote from the user television equipment (22,80), the remote memory (17,78) being configured to store supplemental data for access by the interactive television program guide, the method comprising the steps of:
accessing the program guide data stored in the local memory (21,88) with the interactive television program guide; and
accessing the supplemental data stored in the remote memory (17,78) with the interactive television program guide, wherein when the user takes actions with the user television equipment (22,80) that are indicative of a potential upcoming need for a given portion of the supplemental data, the interactive television program guide requests the given portion of the supplemental data from the remote memory (17,78) in advance of the upcoming need.

27. The method defined in claim 26 wherein the interactive television program guide system comprises a television distribution facility (16), the method **characterized by**:
distributing television programming using the television distribution facility (16) to the user television equipment (22,80) of the plurality of users, wherein the remote memory (17,78) is located in the television distribution facility (16).

28. The method defined in claim 26 **characterized by**:
distributing television programming using the television distribution facility (16) to the user television equipment (22,80) of the plurality of users, wherein the remote memory (17,78) is located in the television distribution facility (16); and
providing, using a main facility (12), the supplemental data to the remote memory (17,78) and the program guide data to the television distribution facility (16) for redistribution to the local memory (21,88).

29. The method defined in claim 26 **characterized in that** the program guide data includes television program listings and that the supplemental data includes detailed program descriptions for at least some of the television program listings.

30. The method defined in claim 26 **characterized in that** the program guide data stored in the local memory (21,88) can be accessed more rapidly with the interactive television program guide than the supplemental data stored in the remote memory (17,78).

31. The method defined in claim 26 **characterized in that** the program guide data includes television program listings and that the supplemental data includes detailed program descriptions for at least some of the television program listings, the method also **characterized by**:
accessing the television program listings more rapidly with the interactive television program guide than the detailed program descriptions.

32. The method defined in claim 26 **characterized in that** when the user takes actions with the interactive television program guide that are indicative of a potential upcoming need for a given portion of the supplemental data, the interactive television program guide requests the given portion of the supplemental data from the remote memory (17,78) in advance of the upcoming need.

33. The method defined in claim 26 **characterized in that** when the user takes actions with the interactive television program guide that are indicative of a potential upcoming need for a given portion of the supplemental data, the interactive television program guide requests the given portion of the supplemental data from the remote memory (17,78) in advance of the upcoming need, wherein the actions of the user with the interactive television program guide involve viewing certain program listings.

34. The method defined in claim 26 **characterized in that** the actions of the user involve tuning to certain television programs.

35. The method defined in claim 26 **characterized in that** the supplemental data includes an application or application extension.

36. The method defined in claim 35 **characterized in that** the application or application extension is a user-selectable option.

37. The method defined in claim 35 **characterized in that** the application or application extension is launched automatically by the program guide.

38. The method defined in claim 26 **characterized in that** the supplemental data includes real-time information.

39. The method defined in claim 38 **characterized in that** the real-time information is overlaid on the television program by the program guide on an on-going basis.

40. The method defined in claim 26 **characterized in that** the supplemental data includes an Internet address.

41. The method defined in claim 26 **characterized in that** the supplemental data includes an Internet address and that the interactive television program guide displays an information screen in which the Internet address is included as a link.

42. The method defined in claim 26 **characterized in that** the supplemental data includes real-time data and that the interactive television program guide displays an information screen in which the real-time data is displayed.

43. The method defined in claim 26 **characterized in that** the supplemental data is requested with the interactive television program guide on-demand by user actions with the interactive television program guide.

44. The method defined in claim 26 **characterized in that** the supplemental data is displayed automatically by the program guide as soon as it is available.

45. The method defined in claim 26 **characterized in that** the supplemental data includes biographies.

46. The method defined in claim 26 **characterized in that** the supplemental data includes video clips.

47. The method defined in claim 26 **characterized in that** the supplemental data includes audio clips.

48. The method defined in claim 26 **characterized in that** the supplemental data includes bitmap graphics.

49. The method defined in claim 26 **characterized in that** the supplemental data includes trivia information.

50. The method defined in claim 26 **characterized in that** the supplemental data includes advertisements.

## Patentansprüche

1. Interaktives Fernsehzeitschriftensystem, das eine Benutzerfernseheinrichtung (22, 80) umfaßt, in dem eine interaktive Fernsehzeitschrift implementiert ist, wobei die Benutzerfernseheinrichtung (44, 80) einen lokalen Speicher (21, 88) enthält und das System einen abgesetzten Speicher (17, 78) an einer Stelle entfernt von der Benutzerfernseheinrichtung (22, 80) hat, wobei:
- der lokale Speicher (21, 88) konfiguriert ist, um die Programmzeitschriftendaten zur Verwendung durch die interaktive Fernsehzeitschrift zu speichern; und
- der abgesetzte Speicher (17, 78) konfiguriert ist, um zusätzliche Daten für den Zugriff durch die interaktive Fernsehzeitschrift zu speichern, wobei, wenn der Benutzer Aktionen mit der Benutzerfernseheinrichtung (22, 80) ausführt, die ein Anzeichen für ein möglicherweise aufkommendes Bedürfnis für einen vorgegebenen Teil der zusätzlichen Daten sind, die interaktive Fernsehzeitschrift den vorgegebenen Teil der zusätzlichen Daten von dem abgesetzten Speicher (17, 78) vor dem auftretenden Bedürfnis anfordert.

2. Interaktives Fernsehzeitschriftensystem nach Anspruch 1, **gekennzeichnet durch** eine Fernsehverteilereinrichtung (16), die konfiguriert ist, um Fernsehprogramme an die Benutzerfernseheinrichtung (22, 80) abzugeben, wobei der abgesetzte Speicher (17, 78) in der Fernsehverteilereinrichtung (16) angeordnet ist.

3. Interaktives Fernsehzeitschriftensystem nach Anspruch 1, **gekennzeichnet durch**:
- eine Fernsehverteilereinrichtung (16), die konfiguriert ist, um Fernsehprogramme an die Benutzerfernseheinrichtung (22, 80) abzugeben, wobei der abgesetzte Speicher (17, 78) an der Fernsehverteilereinrichtung (16) angeordnet ist; und
- eine Hauptstelleneinrichtung (12), die konfiguriert ist, um die zusätzlichen Daten an den abgesetzten Speicher (17, 78) zu liefern, und ferner konfiguriert ist, um die Programmzeitschriftendaten an die Fernsehverteilereinrichtung (17) zur Rückübertragung an den lokalen Speicher (21, 28) zu liefern.

4. Interaktives Fernsehzeitschriftensystem nach Anspruch 1, **dadurch gekennzeichnet, daß** die Programmzeitschriftendaten Fernsehprogrammaufstellungen umfassen, und daß die zusätzlichen Daten detaillierte Programmbeschreibungen von wenigstens einigen der Fernsehprogrammauflistungen umfassen, wobei das System ferner **gekennzeichnet ist durch** eine Fernsehverteilereinrichtung (16), in der der abgesetzte Speicher (17, 78) angeordnet ist.

5. Interaktives Fernsehzeitschriftensystem nach Anspruch 1, **dadurch gekennzeichnet, daß** auf die Programmzeitschriftendaten, die in dem lokalen Speicher (21, 88) gespeichert sind, mit der interaktiven Fernsehzeitschrift schneller zugegriffen werden kann als auf die zusätzlichen Daten, die in dem abgesetzten Speicher (17, 78) gespeichert sind.

6. Interaktives Fernsehzeitschriftensystem nach Anspruch 1, **dadurch gekennzeichnet, daß** die Programmzeitschriftendaten Fernsehprogrammauflistungen umfassen, und daß die zusätzlichen Daten detaillierte Programmbeschreibungen von wenigstens einigen der Fernsehprogrammauflistungen umfassen, wobei das System **gekennzeichnet ist durch** eine Fernsehverteilereinrichtung (16), in der der abgesetzte Speicher (17, 78) angeordnet ist, wobei auf die Fernsehprogrammauflistungen mit der interaktiven Fernsehzeitschrift schneller zugegriffen werden kann als auf die detaillierten Programmbeschreibungen.

7. Interaktives Fernsehzeitschriftensystem nach Anspruch 1, **dadurch gekennzeichnet, daß** der Benutzer mit der interaktiven Fernsehzeitschrift Aktionen ausführt, die ein Anzeichen für ein möglicherweise aufkommendes Bedürfnis für einen vorgegebenen Abschnitt der zusätzlichen Daten sind.

8. Interaktives Fernsehzeitschriftensystem nach Anspruch 1, **dadurch gekennzeichnet, daß** der Benutzer mit der interaktiven Fernsehzeitschrift Aktionen ausführt, die ein Anzeichen für ein möglicherweise aufkommendes Bedürfnis für einen vorgegebenen Abschnitt der zusätzlichen Daten sind, wobei die Aktionen des Benutzers das Einsehen in bestimmte Programmauflistungen umfaßt.

9. Interaktives Fernsehzeitschriftensystem nach Anspruch 1, **dadurch gekennzeichnet, daß** die Aktionen des Benutzers die Einstellung auf bestimmte Fernsehprogramme umfaßt.

10. Interaktives Fernsehzeitschriftensystem nach Anspruch 1, **dadurch gekennzeichnet, daß** die zusätzlichen Daten eine Anwendung oder eine Zusatzanwendung umfassen.

11. Interaktives Fernsehzeitschriftensystem nach Anspruch 10, **dadurch gekennzeichnet, daß** die Anwendung oder die Unteranwendung eine vom Benutzer auswählbare Option ist.

12. Interaktives Fernsehzeitschriftensystem nach Anspruch 10, **dadurch gekennzeichnet, daß** die Anwendung oder die Unteranwendung automatisch durch die Programmzeitschrift eingeleitet wird.

13. Interaktives Fernsehzeitschriftensystem nach Anspruch 1, **dadurch gekennzeichnet, daß** die zusätzlichen Daten die Realzeitinformation umfassen.

14. Interaktives Fernsehzeitschriftensystem nach Anspruch 13, **dadurch gekennzeichnet, daß** die Realzeitinformation durch die Programmzeitschrift in das Fernsehprogramm auf einer andauernden Basis eingeblendet wird.

15. Interaktives Fernsehzeitschriftensystem nach Anspruch 1, **dadurch gekennzeichnet, daß** die zusätzlichen Daten eine Internetadresse umfassen.

16. Interaktives Fernsehzeitschriftensystem nach Anspruch 1, **dadurch gekennzeichnet, daß** die zusätzlichen Daten eine Internetadresse umfassen, und daß die interaktive Fernsehzeitschrift eine Informations-Bildschirmanzeige gibt, in der die Internetadresse als Link eingeschlossen ist.

17. Interaktives Fernsehzeitschriftensystem nach Anspruch 1, **dadurch gekennzeichnet, daß** die zusätzlichen Daten die Realzeitdaten umfassen, und daß die interaktive Fernsehzeitschrift eine Informations-Bildschirmanzeige liefert, in der die Realzeitdaten angezeigt werden.

18. Interaktives Fernsehzeitschriftensystem nach Anspruch 1, **dadurch gekennzeichnet, daß** die zusätzlichen Daten mit der interaktiven Fernsehzeitschrift auf Anfrage durch Benutzeraktionen mit der interaktiven Fernsehzeitschrift abgefragt werden.

19. Interaktives Fernsehzeitschriftensystem nach Anspruch 1, **dadurch gekennzeichnet, daß** die zusätzlichen Daten automatisch durch die Programmzeitschrift angezeigt werden, sobald sie zur Verfügung stehen.

20. Interaktives Fernsehzeitschriftensystem nach Anspruch 1, **dadurch gekennzeichnet, daß** die zusätzlichen Daten Biographien enthalten.

21. Interaktives Fernsehzeitschriftensystem nach Anspruch 1, **dadurch gekennzeichnet, daß** die zusätzlichen Daten Videoclips umfassen.

22. Interaktives Fernsehzeitschriftensystem nach Anspruch 1, **dadurch gekennzeichnet, daß** die zusätzlichen Daten Audioclips umfassen.

23. Interaktives Fernsehzeitschriftensystem nach Anspruch 1, **dadurch gekennzeichnet, daß** die zusätzlichen Daten Bitmap-Grafiken umfassen.

24. Interaktives Fernsehzeitschriftensystem nach Anspruch 1, **dadurch gekennzeichnet, daß** die zusätzlichen Daten Trivialitäten-Informationen umfassen.

25. Interaktives Fernsehzeitschriftensystem nach Anspruch 1, **dadurch gekennzeichnet, daß** die zusätzlichen Daten Anzeigen umfassen.

26. Verfahren zum Benutzen eines interaktiven Fernsehzeitschriftensystems, bei dem eine interaktive Fernsehzeitschrift auf einer Benutzerfernseheinrichtung (22, 80) implementiert ist, wobei die Benutzerfernseheinrichtung (22, 80) einen lokalen Speicher (21, 80), enthält, der konfiguriert ist, um Fernsehzeitschriftendaten zur Verwendung durch die interaktive Fernsehzeitschrift zu speichern, und das System einen abgesetzten Speicher (17, 78) an einer Stelle abgesetzt von der Benutzerfernseheinrichtung (22, 80) hat, wobei der abgesetzte Speicher (17, 78) konfiguriert ist, um zusätzliche Daten für den Zugriff durch die interaktive Fernsehzeitschrift zu speichern, wobei das Verfahren folgende Schritte aufweist:
- Zugreifen mit der interaktiven Fernsehzeitschrift auf die Programmzeitschriftendaten, die in dem lokalen Speicher (21, 88) gespeichert sind; und
- Zugreifen mit der interaktiven Fernsehzeitschrift auf die zusätzlichen Daten, die in dem abgesetzten Speicher (17, 78) gespeichert sind, wobei, wenn der Benutzer Aktionen mit der Benutzerfernseheinrichtung (22, 80) ausführt, die ein Zeichen für ein möglicherweise aufkommendes Bedürfnis für einen vorgegebenen Teil der zusätzlichen Daten darstellt, die interaktive Fernsehzeitschrift im vorgegebenen Abschnitt der zusätzlichen Daten von dem abgesetzten Speicher (17, 78) im Vorgriff auf das aufkommende Bedürfnis abfragt.

27. Verfahren nach Anspruch 26, worin das interaktive Fernsehzeitschriftensystem eine Fernsehverteilereinrichtung (16) umfaßt, wobei das Verfahren **gekennzeichnet ist durch**:
Distribution von Fernsehprogrammen unter Verwendung der Fernsehverteilereinrichtung (16) an die Benutzerfernseheinrichtung (22, 80) einer Vielzahl von Benutzern, wobei der abgesetzte Speicher (17, 78) in der Fernsehverteilereinrichtung (16) angeordnet ist.

28. Verfahren nach Anspruch 26, **gekennzeichnet durch**:
- Distribution von Fernsehprogrammen unter Verwendung der Fernsehverteilereinrichtung (16) an die Benutzerfernseheinrichtung (22, 80) einer Vielzahl von Benutzern, wobei der abgesetzte Speicher (17, 78) in der Fernsehverteilereinrichtung (16) angeordnet ist; und
- unter Benutzung einer Hauptstelleneinrichtung (12) Bereitstellen der zusätzlichen Daten an den abgesetzten Speicher (17, 78) und der Programmzeitschriftendaten an die Fernsehverteilereinrichtung (16) zur Weitergabe an den lokalen Speicher (21, 88).

29. Verfahren nach Anspruch 26, **dadurch gekennzeichnet, daß** die Programmzeitschriftendaten Fernsehprogrammauflistungen umfassen, und daß die zusätzlichen Daten detaillierte Programmbeschreibungen für wenigstens eine der Fernsehprogrammauflistungen umfassen.

30. Verfahren nach Anspruch 26, **dadurch gekennzeichnet, daß** auf die Programmzeitschriftendaten, die in dem lokalen Speicher (21, 88) gespeichert sind, mit der interaktiven Fernsehzeitschrift schneller zugegriffen werden kann als auf die zusätzlichen Daten, die in dem abgesetzten Speicher (17, 78) gespeichert sind.

31. Verfahren nach Anspruch 26, **dadurch gekennzeichnet, daß** die Programmzeitschriftendaten Fernsehprogrammauflistungen umfassen, und daß die zusätzlichen Daten detaillierte Programmbeschreibungen für wenigstens einige der Fernsehprogrammauflistungen umfassen, wobei das Verfahren **gekennzeichnet ist durch**:
Zugreifen mit der interaktiven Fernsehzeitschrift auf die Fernsehprogrammauflistungen mit höherer Geschwindigkeit als auf die detaillierten Programmbeschreibungen.

32. Verfahren nach Anspruch 26, **dadurch gekennzeichnet, daß**, wenn der Benutzer Aktionen mit der interaktiven Fernsehzeitschrift ausführt, die ein Anzeichen für ein möglicherweise aufkommendes Bedürfnis für einen vorgegebenen Abschnitt der zusätzlichen Daten ist, die interaktive Fernsehzeitschrift im vorgegebenen Abschnitt der zusätzlichen Daten von dem abgesetzten Speicher (17, 78) in Vorgriff auf das herankommende Bedürfnis abfragt.

33. Verfahren nach Anspruch 26, **dadurch gekennzeichnet, daß**, wenn der Benutzer mit der interaktiven Fernsehzeitschrift Aktionen ausführt, die ein Anzeichen für ein möglicherweise aufkommendes Bedürfnis für einen vorgegebenen Abschnitt der zusätzlichen Daten sind, die interaktive Fernsehzeitschrift im vorgegebenen Abschnitt der zusätzlichen Daten von dem abgesetzten Speicher (17, 78) in Vorgriff auf das aufkommende Bedürfnis abfragt, wobei die Aktionen des Benutzers mit der interaktiven Fernsehzeitschrift das Betrachten gewisser Programmauflistungen umfaßt.

34. Verfahren nach Anspruch 26, **dadurch gekennzeichnet, daß** die Aktionen des Benutzers das Einstellen bestimmter Fernsehprogramme umfaßt.

35. Verfahren nach Anspruch 26, **dadurch gekennzeichnet, daß** die zusätzlichen Daten eine Anwendung oder eine Zusatzanwendung umfassen.

36. Verfahren nach Anspruch 35, **dadurch gekennzeichnet, daß** die Anwendung oder Zusatzanwendung eine vom Benutzer auswählbare Option ist.

37. Verfahren nach Anspruch 35, **dadurch gekennzeichnet, daß** die Anwendung oder Zusatzanwendung automatisch durch die Programmzeitschrift eingeleitet wird.

38. Verfahren nach Anspruch 26, **dadurch gekennzeichnet, daß** die zusätzlichen Daten eine Realzeitinformation umfassen.

39. Verfahren nach Anspruch 38, **dadurch gekennzeichnet, daß** die Realzeitinformation durch die Fernsehzeitschrift auf einer andauernden Basis über die Fernsehzeitschrift eingeblendet wird.

40. Verfahren nach Anspruch 26, **dadurch gekennzeichnet, daß** die zusätzlichen Daten eine Internetadresse umfassen.

41. Verfahren nach Anspruch 26, **dadurch gekennzeichnet, daß** die zusätzlichen Daten eine Internetadresse umfassen, und daß die interaktive Fernsehzeitschrift eine Informations-Bildschirmdarstellung bereitstellt, in der die Internetadresse als Link eingeschlossen ist.

42. Verfahren nach Anspruch 26, **dadurch gekennzeichnet, daß** die zusätzlichen Daten die Realzeitdaten umfassen, und daß die interaktive Fernsehzeitschrift eine Informations-Bildschirmdarstellung bereitstellt, in der die Realzeitdaten angezeigt werden.

43. Verfahren nach Anspruch 26, **dadurch gekennzeichnet, daß** die zusätzlichen Daten mit der interaktiven Fernsehzeitschrift auf Anfrage durch Benutzeraktionen mit der interaktiven Fernsehzeitschrift abgefragt werden.

44. Verfahren nach Anspruch 26, **dadurch gekennzeichnet, daß** die zusätzlichen Daten automatisch durch die Programmzeitschrift dargestellt werden, sobald sie zur Verfügung stehen.

45. Verfahren nach Anspruch 26, **dadurch gekennzeichnet, daß** die zusätzlichen Daten Biografien umfassen.

46. Verfahren nach Anspruch 26, **dadurch gekennzeichnet, daß** die zusätzlichen Daten Videoclips umfassen.

47. Verfahren nach Anspruch 26, **dadurch gekennzeichnet, daß** die zusätzlichen Daten Audioclips umfassen.

48. Verfahren nach Anspruch 26, **dadurch gekennzeichnet, daß** die zusätzlichen Daten Bitmap-Grafiken umfassen.

49. Verfahren nach Anspruch 26, **dadurch gekennzeichnet, daß** die zusätzlichen Daten Trivialitäten-Informationen umfassen.

50. Verfahren nach Anspruch 26, **dadurch gekennzeichnet, daß** die zusätzlichen Daten Anzeigen umfassen.

## Revendications

1. Système de guide interactif de programmes télévisés comprenant un équipement de télévision personnel (22, 80) dans lequel un guide interactif de programmes télévisés est installé, l'équipement de télévision personnel (22, 80) contenant une mémoire locale (21, 88) et le système ayant une mémoire externe (17, 78) à un emplacement distant de l'équipement de télévision personnel (22, 80), dans lequel
la mémoire locale (21, 88) est configurée de manière à stocker des données du guide des programmes destinées à être utilisées par le guide interactif de programmes télévisés; et
la mémoire externe (17, 78) est configurée de manière à stocker des données supplémentaires accessibles par le guide interactif de programmes télévisés, dans lequel lorsque l'utilisateur effectue des actions avec l'équipement de télévision personnel (22, 80) qui sont indicatives d'un besoin potentiel à venir d'une portion donnée des données supplémentaires, le guide interactif de programmes télévisés appelle la portion donnée des données supplémentaires auprès de la mémoire externe (17, 78) préalablement au besoin à venir.

2. Système de guide interactif de programmes télévisés suivant la revendication 1, **caractérisé par** une installation de télédistribution (16) configurée de manière à distribuer des programmes télévisés à l'équipement de télévision personnel (22, 80), dans lequel la mémoire externe (17, 78) est située dans l'installation de télédistribution (16).

3. Système de guide interactif de programmes télévisés suivant la revendication 1, **caractérisé par**
une installation de télédistribution (16) configurée de manière à distribuer des programmes télévisés à l'équipement de télévision personnel (22, 80), dans lequel la mémoire externe (17, 78) est située dans l'installation de télédistribution (16); et
une installation principale (12) configurée de manière à fournir les données supplémentaires à la mémoire externe (17, 78) et configurée de manière à fournir les données du guide des programmes à l'installation de télédistribution (16) afin qu'elles soient redistribuées à la mémoire locale (21, 88).

4. Système de guide interactif de programmes télévisés suivant la revendication 1, **caractérisé en ce que** les données du guide des programmes comprennent des listes de programmes télévisés et **en ce que** les données supplémentaires comprennent des descriptions détaillées des programmes pour au moins certaines des listes de programmes télévisés, le système étant aussi **caractérisé par** une installation de télédistribution (16) dans laquelle la mémoire externe (17, 78) est installée.

5. Système de guide interactif de programmes télévisés suivant la revendication 1, **caractérisé en ce qu'**il est possible d'accéder aux données du guide des programmes stockées dans la mémoire locale (21, 88) à l'aide du guide interactif de programmes télévisés plus rapidement qu'aux données supplémentaires stockées dans la mémoire externe (17, 78).

6. Système de guide interactif de programmes télévisés suivant la revendication 1, **caractérisé en ce que** les données du guide des programmes comprennent des listes de programmes télévisés et **en ce que** les données supplémentaires comprennent des descriptions détaillées de programmes pour au moins certaines des listes de programmes télévisés, le système étant **caractérisé par** une installation de télédistribution (16) dans laquelle la mémoire externe (17, 78) est située, et dans lequel il est possible d'accéder aux listes de programmes télévisés à l'aide du guide interactif de programmes télévisés plus rapidement qu'aux descriptions détaillées des programmes.

7. Système de guide interactif de programmes télévisés suivant la revendication 1, **caractérisé en ce que** l'utilisateur effectue des actions avec le guide interactif de programmes télévisés qui sont indicatives d'un besoin potentiel à venir d'une portion donnée des données supplémentaires.

8. Système de guide interactif de programmes télévisés suivant la revendication 1, **caractérisé en ce que** l'utilisateur effectue des actions avec le guide interactif de programmes télévisés qui sont indicatives d'un besoin potentiel à venir d'une portion donnée des données supplémentaires, lesdites actions de l'utilisateur impliquant la visualisation de certaines listes de programmes.

9. Système de guide interactif de programmes télévisés suivant la revendication 1, **caractérisé en ce que** les actions de l'utilisateur impliquent la syntonisation de certains programmes télévisés.

10. Système de guide interactif de programmes télévisés suivant la revendication 1, **caractérisé en ce que** les données supplémentaires comprennent une application ou une extension d'application.

11. Système de guide interactif de programmes télévisés suivant la revendication 10, **caractérisé en ce que** l'application ou l'extension d'application est une option sélectionnable par l'utilisateur.

12. Système de guide interactif de programmes télévisés suivant la revendication 10, **caractérisé en ce que** l'application ou l'extension d'application est automatiquement lancée par le guide des programmes.

13. Système de guide interactif de programmes télévisés suivant la revendication 1, **caractérisé en ce que** les données supplémentaires comprennent des informations en temps réel.

14. Système de guide interactif de programmes télévisés suivant la revendication 13, **caractérisé en ce que** les informations en temps réel sont superposées au programme télévisé par le guide des programmes sur une base continue.

15. Système de guide interactif de programmes télévisés suivant la revendication 1, **caractérisé en ce que** les données supplémentaires comprennent une adresse Internet.

16. Système de guide interactif de programmes télévisés suivant la revendication 1, **caractérisé en ce que** les données supplémentaires comprennent une adresse Internet et **en ce que** le guide interactif de programmes télévisés affiche un écran d'information dans lequel l'adresse Internet apparaît sous la forme d'un lien.

17. Système de guide interactif de programmes télévisés suivant la revendication 1, **caractérisé en ce que** les données supplémentaires comprennent des données en temps réel et **en ce que** le guide interactif de programmes télévisés affiche un écran d'information dans lequel les données en temps réel sont affichées.

18. Système de guide interactif de programmes télévisés suivant la revendication 1, **caractérisé en ce que** les données supplémentaires sont appelées à l'aide du guide interactif de programmes télévisés sur demande par des actions de l'utilisateur avec le guide interactif de programmes télévisés.

19. Système de guide interactif de programmes télévisés suivant la revendication 1, **caractérisé en ce que** les données supplémentaires sont affichées automatiquement par le guide des programmes aussitôt qu'elles sont disponibles.

20. Système de guide interactif de programmes télévisés suivant la revendication 1, **caractérisé en ce que** les données supplémentaires comprennent des biographies.

21. Système de guide interactif de programmes télévisés suivant la revendication 1, **caractérisé en ce que** les données supplémentaires comprennent des clips vidéo.

22. Système de guide interactif de programmes télévisés suivant la revendication 1, **caractérisé en ce que** les données supplémentaires comprennent des clips audio.

23. Système de guide interactif de programmes télévisés suivant la revendication 1, **caractérisé en ce que** les données supplémentaires comprennent des images graphiques en mode point.

24. Système de guide interactif de programmes télévisés suivant la revendication 1, **caractérisé en ce que** les données supplémentaires comprennent des informations méli-mélo.

25. Système de guide interactif de programmes télévisés suivant la revendication 1, **caractérisé en ce que** les données supplémentaires comprennent des annonces publicitaires.

26. Procédé pour utiliser un système de guide interactif de programmes télévisés dans lequel un guide interactif de programmes télévisés est installé sur un équipement de télévision personnel (22, 80), l'équipement de télévision personnel (22, 80) contenant une mémoire locale (21, 88) configurée de manière à stocker des données du guide des programmes destinées à être utilisées par le guide interactif de programmes télévisés, et le système ayant une mémoire externe (17, 78) à un emplacement distant de l'équipement de télévision personnel (22, 80), la mémoire externe (17, 78) étant configurée de manière à stocker des données supplémentaires accessibles par le guide interactif de programmes télévisés, le procédé comprenant les étapes suivantes:
accès aux données du guide des programmes télévisés stockées dans la mémoire locale (21, 88) à l'aide du guide interactif de programmes télévisés; et
accès aux données supplémentaires stockées dans la mémoire externe (17, 78) à l'aide du guide interactif de programmes télévisés, dans lequel lorsque l'utilisateur effectue des actions avec l'équipement de télévision personnel (22, 80) qui sont indicatives d'un besoin potentiel à venir d'une portion donnée des données supplémentaires, le guide interactif de programmes télévisés appelle la portion donnée des données supplémentaires auprès de la mémoire externe (17, 78) préalablement au besoin à venir.

27. Procédé suivant la revendication 26, dans lequel le système de guide interactif de programmes télévisés comprend une installation de télédistribution (16), le procédé étant **caractérisé par**:
la distribution de programmes télévisés à l'aide de l'installation de télédistribution (16) à l'équipement de télévision personnel (22, 80) d'une pluralité d'utilisateurs, dans lequel la mémoire externe (17, 78) est située dans l'installation de télédistribution (16).

28. Procédé suivant la revendication 26, **caractérisé par**:
la distribution de programmes télévisés à l'aide de l'installation de télédistribution (16) à l'équipement de télévision personnel (22, 80) d'une pluralité d'utilisateurs, dans lequel la mémoire externe (17, 78) est située dans l'installation de télédistribution (16); et
la fourniture, à l'aide d'une installation principale (12), des données supplémentaires à la mémoire externe (17, 78) et des données du guide des programmes à l'installation de télédistribution (16) afin qu'elles soient redistribuées à la mémoire locale (21, 88).

29. Procédé suivant la revendication 26, **caractérisé en ce que** les données du guide des programmes comprennent des listes de programmes télévisés et **en ce que** les données supplémentaires comprennent des descriptions détaillées des programmes pour au moins certaines des listes de programmes télévisés.

30. Procédé suivant la revendication 26, **caractérisé en ce qu'**il est possible d'accéder aux données du guide des programmes stockées dans la mémoire locale (21, 88) à l'aide du guide interactif de programmes télévisés plus rapidement qu'aux données supplémentaires stockées dans la mémoire externe (17, 78).

31. Procédé suivant la revendication 26, **caractérisé en ce que** les données du guide des programmes comprennent des listes de programmes télévisés et **en ce que** les données supplémentaires comprennent des descriptions détaillées des programmes pour au moins certaines des listes de programmes télévisés, le procédé étant aussi **caractérisé par**:
un accès aux listes de programmes télévisés à l'aide du guide interactif de programmes télévisés plus rapide qu'aux descriptions détaillées des programmes.

32. Procédé suivant la revendication 26, **caractérisé en ce que** lorsque l'utilisateur effectue des actions avec le guide interactif de programmes télévisés qui sont indicatives d'un besoin potentiel à venir d'une portion donnée des données supplémentaires, le guide interactif de programmes télévisés appelle la portion donnée des données supplémentaires auprès de la mémoire externe (17, 78) préalablement au besoin à venir.

33. Procédé suivant la revendication 26, **caractérisé en ce que** lorsque l'utilisateur effectue des actions avec le guide interactif de programmes télévisés qui sont indicatives d'un besoin potentiel à venir d'une portion donnée des données supplémentaires, le guide interactif de programmes télévisés appelle la portion donnée des données supplémentaires auprès de la mémoire externe (17, 78) préalablement au besoin à venir, dans lequel les actions de l'utilisateur avec le guide interactif de programmes télévisés impliquent la visualisation de certaines listes de programmes.

34. Procédé suivant la revendication 26, **caractérisé en ce que** les actions de l'utilisateur impliquent la syntonisation de certains programmes télévisés.

35. Procédé suivant la revendication 26, **caractérisé en ce que** les données supplémentaires comprennent une application ou une extension d'application.

36. Procédé suivant la revendication 35, **caractérisé en ce que** l'application ou l'extension d'application est une option sélectionnable par l'utilisateur.

37. Procédé suivant la revendication 35, **caractérisé en ce que** l'application ou l'extension d'application est automatiquement lancée par le guide des programmes.

38. Procédé suivant la revendication 26, **caractérisé en ce que** les données supplémentaires comprennent des informations en temps réel.

39. Procédé suivant la revendication 38, **caractérisé en ce que** les informations en temps réel sont superposées au programme télévisé par le guide des programmes sur une base continue.

40. Procédé suivant la revendication 26, **caractérisé en ce que** les données supplémentaires comprennent une adresse Internet.

41. Procédé suivant la revendication 26, **caractérisé en ce que** les données supplémentaires comprennent une adresse Internet et **en ce que** le guide interactif de programmes télévisés affiche un écran d'information dans lequel l'adresse Internet apparaît sous la forme d'un lien.

42. Procédé suivant la revendication 26, **caractérisé en ce que** les données supplémentaires comprennent des données en temps réel et **en ce que** le guide interactif de programmes télévisés affiche un écran d'information dans lequel les données en temps réel sont affichées.

43. Procédé suivant la revendication 26, **caractérisé en ce que** les données supplémentaires sont appelées à l'aide du guide interactif de programmes télévisés sur demande par les actions de l'utilisateur avec le guide interactif de programmes télévisés.

44. Procédé suivant la revendication 26, **caractérisé en ce que** les données supplémentaires sont affichées automatiquement par le guide des programmes aussitôt qu'elles sont disponibles.

45. Procédé suivant la revendication 26, **caractérisé en ce que** les données supplémentaires comprennent des biographies.

46. Procédé suivant la revendication 26, **caractérisé en ce que** les données supplémentaires comprennent des clips vidéo.

47. Procédé suivant la revendication 26, **caractérisé en ce que** les données supplémentaires comprennent des clips audio.

48. Procédé suivant la revendication 26, **caractérisé en ce que** les données supplémentaires comprennent des images graphiques en mode point.

49. Procédé suivant la revendication 26, **caractérisé en ce que** les données supplémentaires comprennent des informations méli-mélo.

50. Procédé suivant la revendication 26, **caractérisé en ce que** les données supplémentaires comprennent des annonces publicitaires.
